# FASCICULE DE BREVET EUROPEEN

(11) **EP 2 364 569 B1**
(45) Date de publication et mention de la délivrance du brevet: **05.09.2012**
(21) Numéro de dépôt: 09797128.7
(22) Date de dépôt: 30.11.2009
(51) Int. Cl.: H04W 4/02, H04L 29/08

(54) **SYSTEME POUR LE SUIVI LORS DE LEUR TRANSPORT EN VEHICULE DE CONTENEURS INTEGRANT UN PRODUIT NOCIF**
SYSTEM ZUM ÜBERWACHEN VON BEHÄLTERN, DIE EIN SCHÄDLICHES PRODUKT ENTHALTEN, WÄHREND DES TRANSPORTS PER FAHRZEUG
SYSTEM FOR MONITORING CONTAINERS CONTAINING A NOXIOUS PRODUCT DURING TRANSPORT BY VEHICLE

(30) Priorité: 28.11.2008 FR 0806696
(43) Date de publication de la demande: 14.09.2011
(73) Titulaire: LEMER PROTECTION ANTI-X PAR ABREVIATION SOCIETE LEMER PAX, 44470 Carquefou (FR)
(72) Inventeur: LEMER, Pierre-Marie, F-44000 Nantes (FR)
(74) Mandataire: Orsini, Fabienne
(86) Numéro de dépôt international: PCT/FR2009/052344
(87) Numéro de publication internationale: WO 2010/061154

(56) Documents cités:
- EP-A- 1 047 012
- JP-A- 2001 261 159
- US-A- 5 448 220
- US-A- 5 887 176
- US-A1- 2003 227 382

## Description

La présente invention concerne un système pour le suivi/pistage, lors de leur transport dans un véhicule, de conteneurs intégrant un produit nocif, par exemple un produit radioactif.

Certaines activités emploient des produits dangereux, notamment pour l'organisme humain et/ou l'environnement.
C'est par exemple le cas dans le domaine médical où l'on administre parfois aux patients une dose déterminée d'une solution radioactive ou radio-isotope, dans un but de diagnostic ou de traitement.

Ces solutions radioactives sont conditionnées en conteneurs blindés pour leur stockage et leur transport, afin de protéger des radiations toute personne susceptible d'intégrer leur environnement proche (de tels conteneurs sont par exemple décrits dans le document WO-A-2008/040904).
Elles sont généralement fabriquées sur un premier site où elles sont conditionnées dans les conteneurs de protection précités, avant d'être transportées dans un véhicule jusqu'à un site final d'utilisation (centres de médecine nucléaire : hôpitaux, cliniques ...).

Des règles de sécurité ont été développées pour gérer la manipulation de ces conteneurs et des substances radioactives qu'ils intègrent ; mais il n'existe actuellement pas de moyens ou de systèmes efficaces et fiables pour s'assurer que le transport des conteneurs entre deux sites a été réalisé dans des conditions satisfaisantes (notamment en terme de temps d'acheminement et de destination).

On connaît par les documents EP-1 047 012 et JP-2001 261 159 des systèmes complexes et onéreux prévoyant d'équiper chaque conteneur de moyens pour sa localisation géographique et de moyens émetteurs sans fil d'identification et de localisation.

Un autre système de suivi/pistage, conforme au préambule de la revendication 1, est décrit dans le document US 2003/227382 A1, s'appliquant à des colis placés dans des caissons de transport maritime.
Mais un tel système de suivi s'avère incomplet et non adapté pour une sécurisation efficace de conteneurs dangereux lors de leur transport par véhicule routier.

Dans ce contexte, la demanderesse a développé un système pour le suivi/pistage de conteneurs dangereux lors de leur transport en véhicule, applicable en particulier pour la traçabilité des conteneurs blindés intégrant une source radioactive, tel que défini dans la revendication 1.

Ce système de suivi/pistage particulier permet ainsi une gestion efficace des conteneurs tout au long de leur transport et participe à la chaîne d'assurance qualité des différents opérateurs et utilisateurs ; ce système participe activement à la protection civile. Cette architecture du système limite, en plus, les moyens à intégrer dans les conteneurs, ce qui réduit sa complexité et les coûts de revient.

D'autres caractéristiques avantageuses de la présente invention, pouvant être prises indépendamment ou en combinaison les unes avec les autres, sont précisées ci-dessous :
- les moyens de localisation géographique consistent en un dispositif utilisant la technologie Global Positioning System (connue encore sous l'appellation « GPS ») ;
- les moyens émetteurs sans fil du véhicule consistent en un dispositif assurant une transmission de données en mode paquets du type GPRS ;
- les moyens de stockage du serveur central de gestion comportent des moyens d'historisation, pour l'édition de journaux de suivi ;
- le système de suivi/pistage comprend encore avantageusement des moyens pour l'identification unique du conducteur et des moyens pour l'identification unique du véhicule ; et les données transmises au serveur central de gestion par le module du véhicule contiennent également les identifiants uniques du conducteur et du véhicule.

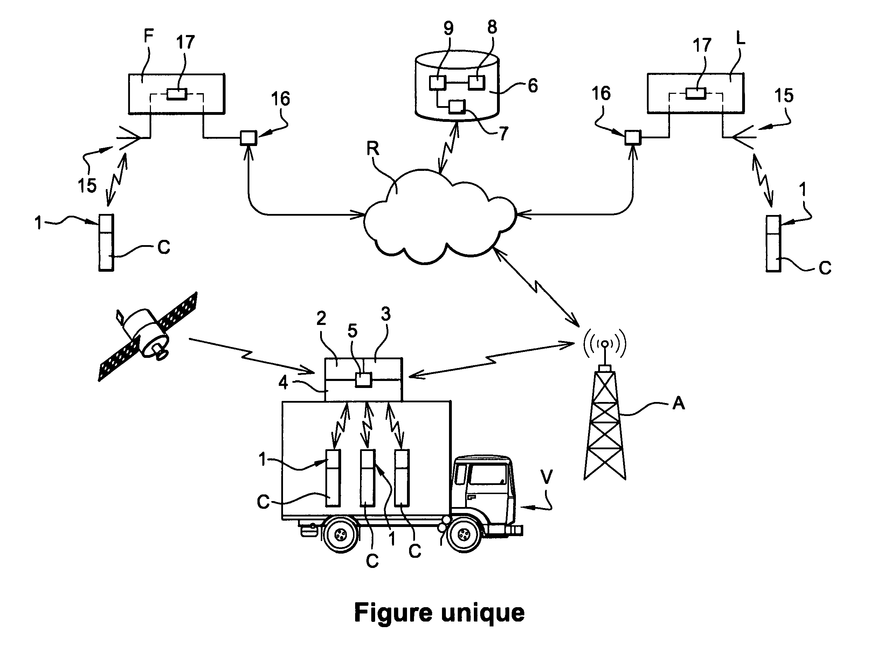

L'invention sera encore illustrée, sans être aucunement limitée, par la description suivante en relation avec la figure annexée, illustrant une structure possible du système de suivi/pistage.

Comme représenté schématiquement sur la figure annexée, le système correspondant est adapté pour le suivi/pistage de conteneurs C intégrant un produit d'intérêt (c'est-à-dire un produit de valeur, ou encore un produit considéré comme dangereux pour l'organisme humain et/ou pour l'environnement).

Ce système selon l'invention est utile en particulier pour le suivi/pistage des conteneurs C lors de leur transport entre deux sites éloignés, dans un véhicule V par exemple un véhicule de transport routier.
En l'occurrence, ce transport des conteneurs C s'effectue depuis un site de fabrication F, jusqu'à un site de livraison L. De manière alternative, ce transport peut également être mis en oeuvre entre le site d'utilisation des produits et un site de traitement des déchets.

Le présent système décrit est en particulier employé pour le suivi/pistage de conteneurs blindés C destinés à contenir une source radioactive (par exemple une solution radioactive de type fluorodéoxyglucose (FDG), tels que décrits notamment dans le document WO-A-2008/040904).

Dans ce système conforme à l'invention, chaque conteneur C est tout d'abord équipé de moyens émetteurs sans fil 1, adaptés pour émettre un signal d'identification unique.
Ces moyens émetteurs 1 peuvent, si nécessaire, diffuser tout autre signal utile.

Les moyens émetteurs 1 en question consistent, par exemple, en un dispositif de radio-identification (généralement désigné sous le sigle « RFID » ou « Radio Frequency Identification »).
Ces moyens émetteurs 1 sont choisis avantageusement avec une portée maximale de quelques mètres à quelques dizaines de mètres. Cette portée favorise la détection uniquement des conteneurs présents dans le véhicule, comme développé ci-après.

Le signal d'identification émis consiste avantageusement en une identification numérique, attribuée spécifiquement à chacun des conteneurs.
Ce signal d'identification émis sera établi selon un standard adapté, par exemple de type protocole TCP (Transmission Control Protocol)/IP (Internet Protocol).

Le véhicule V utilisé pour le transport des conteneurs C, est équipé de moyens fonctionnels (en particulier électronique/informatique) venant compléter le système de suivi/pistage selon l'invention.

En l'occurrence, ce véhicule V comporte :
- des moyens de localisation géographique 2,
- des moyens de communication sans fil 3,
- des moyens récepteurs/émetteurs 4, aptes à détecter le signal d'identification unique émis par chacun des conteneurs C transportés dans le véhicule V, et
- un module 5 réalisant l'interface entre les moyens 2, 3 et 4 précités.

Les moyens de localisation géographique 2 correspondants seront choisis par l'homme du métier, notamment en fonction du degré de précision recherché.
A titre indicatif, ces moyens de géolocalisation 2 peuvent utiliser les technologies suivantes, connues de l'homme du métier : « GPS » (Global Positioning System), « Cell-ID » (utilisant le réseau de l'opérateur de téléphonie mobile), « A-GPS » (pour « Assisted GPS »), ceci indépendamment ou en combinaison.

Les moyens de communication sans fil 3 qui équipent le véhicule V utilisent quant à eux un réseau de télécommunication R, par exemple un Réseau Terrestre Mobile Public (RTMP) comprenant un maillage d'antennes-relais A (dénommées encore stations de base) installées sur le territoire où le véhicule V circule.
Ces moyens de communication sans fil 3 peuvent utiliser une ou plusieurs normes de télécommunication connues de l'homme du métier, notamment GSM (pour « Global System for Mobile communication ») ou encore de préférence GPRS (pour « Général Packet Radio Service »).

Ces moyens de communication 3 fonctionnent en tant que moyens émetteurs, et avantageusement également en tant que moyens récepteurs, comme développé par la suite.

Les moyens récepteurs/émetteurs 4 du véhicule V consistent quant à eux avantageusement en un dispositif du genre lecteur (c'est-à-dire un dispositif actif, émetteur de radiofréquence), apte à communiquer avec les moyens émetteurs sans fil 1 équipant les conteneurs C.
Ces moyens récepteurs/émetteurs 4 sont aptes à détecter le signal d'identification unique émis par chacun des conteneurs C présents dans le véhicule V.

Le module d'interface 5 est choisi et développé par l'homme du métier.
Il peut contenir en particulier une unité de calcul et des moyens de stockage de données, ces derniers étant destinés à contenir le (ou les) logiciel(s)/programme(s) informatique(s) mis en oeuvre par l'unité de calcul et venant piloter le fonctionnement des différents moyens fonctionnels 2, 3 et 4 équipant le véhicule V comme développé ci-après.

Le système de suivi/pistage selon l'invention comprend encore un serveur central de gestion 6, pour déterminer et suivre les conteneurs C transportés dans le véhicule V.
A cet effet, ce serveur central de gestion 6 comporte en particulier :
- des moyens récepteurs 7, pour la réception/acquisition des données émises par les moyens de communication 3 du véhicule V,
- des moyens pour le stockage de données 8, comportant notamment des moyens d'historisation pour permettre l'édition d'un journal de suivi,
- un module 9 réalisant l'interface entre les moyens 7 et 8 constitutifs de ce serveur 6, et
- un terminal de contrôle, pour un opérateur.

Le module d'interface 9 comprend en particulier une unité de calcul et des moyens de traitement des données (non représentés), par exemple de type logiciel(s)/programme(s) informatique(s), exploitant les données contenues dans les moyens de stockage 8 précités.

Le fonctionnement du système de suivi/pistage selon l'invention, et en particulier de son serveur central de gestion 6, est décrit ci-après.
Ce système de suivi/pistage détermine en particulier, en continu ou à intervalles de temps réguliers (par exemple toutes les 10 secondes), le ou les conteneurs C transportés dans le véhicule V.

En pratique, chaque conteneur C contenu dans le véhicule V émet son signal d'identification unique, détecté par les moyens récepteurs 4.

Le module d'interface 5 équipant le véhicule V émet, *via* ses moyens de communication 3, des informations/données jusqu'au serveur central de gestion 6.
Les données en question contiennent, au moins : - l'identification unique de chaque conteneur C détecté dans le véhicule V, et - les coordonnées géographiques déterminées par les moyens de géolocalisation 2.
De préférence, les données émises contiennent également : - l'identification unique du véhicule de transport V (utile lorsque plusieurs véhicules doivent être gérés), et - l'identifiant unique du conducteur, émis par exemple par un badge d'identification porté par le conducteur (similaire aux moyens émetteurs 1 des conteneurs C) et détecté par les moyens récepteurs 4 du véhicule.

Les données transmises transitent par le réseau de télécommunication R, pour parvenir au serveur central de gestion 6.

Les moyens de traitement de données du serveur central de gestion 6 complètent une base de données dédiée, intégrée dans les moyens de stockage 8, à partir des données reçues par les moyens de réception 7.
En particulier, cette base de données associe, pour un conteneur C déterminé, sa localisation géographique (correspondant à la localisation géographique du véhicule) et le véhicule V dans lequel il est transporté.

Un opérateur autorisé peut alors connaître, en temps réel (en continu ou à intervalle de temps régulier), la position des conteneurs C lors de leur transport en véhicule. La sécurité du transport est ainsi significativement optimisée. De plus, les coûts d'installation et de fonctionnement du système sont compétitifs : on peut notamment utiliser le dispositif de géolocalisation équipant le véhicule, et on évite l'équipement de chaque conteneur avec un dispositif de géolocalisation dédié.

Le système de suivi/pistage selon l'invention a encore l'avantage d'être polyvalent et de pouvoir être adapté aux besoins du client.

Ainsi, le serveur central de gestion 6 peut par exemple être programmé pour informer/alerter un ou des opérateurs lorsqu'un contenant C est anormalement absent de son véhicule de transport V.

Pour cela, les moyens de stockage 8 du serveur 6 comprennent encore une base de données « référence » dans laquelle est référencée l'identification unique de chaque conteneur C devant normalement se trouver dans le véhicule V.
D'autre part, les moyens de traitement du serveur 6 comportent des moyens d'alarme (par exemple un programme informatique) qui comparent, en temps réel ou à intervalles de temps réguliers, la base de données « référence » et la base de données contenant les identifications uniques des conteneurs C issus des moyens récepteurs/émetteurs 4 du véhicule V.

En fonctionnement, lorsqu'une différence est détectée entre ces deux bases, les moyens d'alarme du serveur central 6 sont activés. Un signal d'alarme est alors envoyé à un ou plusieurs opérateurs prédéterminés : par exemple une personne d'un service de gestion/de surveillance (chez un prestataire de service par exemple), le conducteur de véhicule V, les pompiers ou encore la gendarmerie.
Ce ou ces opérateurs prennent les dispositions adaptés au cas par cas, en fonction notamment d'un protocole d'action/d'intervention préétabli.

De manière alternative, cette alarme peut être déclenchée manuellement par le conducteur, par exemple en cas d'accidents ou d'imprévus.

Pour compléter le système de suivi, les sites de fabrication F et de livraison L sont avantageusement chacun équipés :
- de moyens récepteurs 15, aptes à détecter le signal d'identification unique émis par les conteneurs C,
- de moyens de communication 16, filaires ou sans fils, destinés également à utiliser le réseau de télécommunication R mentionné ci-dessus, et
- d'un module 17 réalisant l'interface entre les moyens récepteurs 15 et les moyens de communication 16.

Les moyens récepteurs 15 et de communication 16 sont avantageusement identiques, ou au moins similaires, à ceux équipant le véhicule V.
Plus précisément, les moyens récepteurs 15 équipent de préférence les zones d'expédition et/ou de réception des sites F et L. Le conteneur C est alors détecté seulement lorsqu'il rentre et/ou sort du site F, L en question.

Le module d'interface 17 consiste également en une unité de calcul associée à des moyens de traitement des données de type programme(s) informatique(s)/logiciel(s).
Ce module d'interface 17 est programmé pour assurer la transmission au serveur central de gestion 6, *via* le réseau de télécommunication R, de données contenant au moins l'identification unique de chaque conteneur C détecté par les moyens récepteurs 15.
De préférence, chaque site est également attribué à un identifiant unique, pour vérifier notamment la livraison de chaque conteneur sur le site convenable de destination.

Dans ce cas, les moyens d'alarme du serveur central de gestion 6 comportent avantageusement des moyens de temporisation, pour retarder pendant un temps déterminé l'activation des moyens d'alarme.
Le temps de temporisation correspondant est prévu afin d'autoriser le transfert des conteneurs C par un opérateur, entre le site de fabrication F et le véhicule de transport V, et aussi entre le véhicule de transport V et le site de livraison L.
Cette temporisation est utile dans le cas où le signal d'identification du conteneur C n'est plus détecté lors de son transfert par les moyens récepteurs 4 et 15 dédiés.

En fonctionnement normal, lorsque le conteneur C est détecté par les moyens récepteurs 15 du site de fabrication F ; l'identifiant unique du contenant C est émis par les moyens de communication 16 et intégré à la base de données « référence ».
Le conteneur C peut être transféré dans le véhicule V en vue de son transport.

Lorsque le véhicule V arrive sur le site de livraison L, un opérateur peut prendre en charge le contenant C à livrer, de sorte à le transférer du véhicule V jusqu'au site de livraison L. Le contenant C est détecté par les moyens récepteurs 15 du site de livraison L ; les moyens de communication 16 du site de livraison L communiquent, *via* le réseau de télécommunication R, au serveur central de gestion 6 que le conteneur C est bien réceptionné dans le site de livraison L.
L'identifiant unique de ce conteneur C est retiré de la base de données « référence ».

Lors de ce transfert du site de fabrication au site de livraison, le contenant C est suivi/pisté, en permanence.

En cas d'anomalie(s), les moyens d'alarme vont être activés, c'est-à-dire en particulier lorsque :
- au niveau du site de fabrication F : le contenant C n'est plus détecté ni par les moyens récepteurs 15 du site, ni par les moyens récepteurs 4 du véhicule V de destination (problème de transfert du conteneur C, dans le temps imparti) ;
- au niveau du véhicule V : (i) le contenant C n'est pas détecté par les moyens récepteurs 4 du véhicule V (problème de sortie/extraction anormale du conteneur C, hors du véhicule) ; (ii) le contenant C n'est pas chargé dans le bon véhicule ; (iii) écarts d'itinéraire ou arrêts prolongés non prévus ; (iv) en cas de difficulté pour le chauffeur (accident, incendie, attaque, etc.) ou encore
- au niveau du site de livraison L : le contenant C est extrait du véhicule V, sans être détecté dans un laps de temps déterminé par les moyens récepteurs 15 du site de livraison L ; le conteneur C n'est pas déposé au niveau du bon site de livraison.

Le système de suivi/pistage selon l'invention présente donc l'intérêt d'être relativement simple à mettre en oeuvre, tout en offrant un traçage efficace des conteneurs tout au long de leur transport (en temps réel ou quasi temps réel), depuis un premier site de départ (par exemple un cyclotron) jusqu'à un second site de réception (un centre de médecine nucléaire).

Comme précisé auparavant, bien qu'un tel système soit particulièrement intéressant pour assurer le suivi de solutions radioactives depuis leur site de fabrication jusqu'à leur site d'utilisation, il peut aussi être mis en oeuvre pour la traçabilité de tout autre produit dangereux ou considéré de valeur.

## Revendications

1. Système pour le suivi/pistage de conteneurs (C) intégrant un produit nocif, par exemple un produit radioactif, au moyen d'un serveur central de gestion (6), lors de leur transport: entre deux sites (F, L) dans un véhicule (V), en particulier depuis un site de fabrication (F) jusqu'à un site de livraison (L), dans lequel :
a/ lesdits conteneurs (C) sont équipés chacun de moyens émetteurs sans fil (1), pour au moins émettre un signal d'identification unique, lesquels moyens émetteurs sans fil (1) consistent en des dispositifs ayant une portée maximale de quelques mètres à quelques dizaines de mètres,
b/ le véhicule de transport (V) comporte :
b1/ des moyens de localisation géographique (2),
b2/ des moyens récepteurs (4), pour détecter le signal d'identification unique émis par chacun des conteneurs (C) transportés dans ledit véhicule (V),
b3/ des moyens émetteurs sans fil (3), et
b4/ un module (5) réalisant l'interface entre lesdits moyens (2, 3, 4) équipant le véhicule (V),
lequel module (5) comporte des moyens pour transmettre audit serveur central de gestion (6),
*via* lesdits moyens émetteurs (3), des données contenant au moins - l'identifiant unique de chaque conteneur (C) détecté par lesdits moyens récepteurs (4) du véhicule (V), et - les coordonnées géographiques déterminées par lesdits moyens de localisation géographique (2),
c/ ledit serveur central de gestion (6) comporte :
c1/ des moyens récepteurs (7), pour la réception/acquisition des données émises par les moyens émetteurs du véhicule (3),
c2/ des moyens pour le stockage de données (8),
c3/ un module (9) comportant des moyens de traitement des données, pour déterminer les conteneurs (C) transportés dans ledit véhicule (V),
lesquels moyens de stockage (8) du serveur central de gestion (6) comprennent une base de données « référence », dans laquelle est référencé l'identifiant unique de chaque conteneur (C) devant être transporté dans le véhicule (V), les moyens de traitement du serveur central de gestion (6) comportant des moyens pour comparer les identifiants uniques de ladite base « référence » avec les identifiants uniques reçus par lesdits moyens récepteurs (7) dudit serveur central de gestion (6), et ledit serveur central de gestion (6) comportant des moyens d'alarme, pour informer un opérateur lorsqu'une différence est détectée entre ladite base « référence » et lesdits identifiants uniques reçus par les moyens récepteurs (7) du serveur central de gestion (6),
**caractérisé en ce que** ledit véhicule de transport (V) consiste en un véhicule routier,
**en ce que** ledit module (9) réalise l'interface entre les moyens (7, 8) constitutifs du serveur (6),
**en ce que** lesdits sites (F et L) entre lesquels sont transportés les conteneurs (C), sont équipés chacun :
- de moyens récepteurs (15) pour détecter le signal d'identification unique émis par les conteneurs (C),
- de moyens de communication (16), et
- d'un module (17) réalisant l'interface entre lesdits moyens récepteurs (15) et de communication (16), lequel module (17) comporte des moyens pour transmettre au serveur central de gestion (6), *via* lesdits moyens de communication (16), des données contenant au moins l'identifiant unique de chaque conteneur (C) détecté par lesdits moyens récepteurs (15), et **en ce que** lesdits moyens d'alarme du serveur central de gestion (6) comportent des moyens de temporisation, pour retarder pendant un temps déterminé l'activation desdits moyens d'alarme, afin d'autoriser le passage des conteneurs (C) entre un desdits sits (F, L) et le véhicule de transport (V).

2. Système de suivi selon la revendication 1, **caractérisé en ce que** les moyens de localisation géographique (2) consistent en un dispositif Global Positioning System.

3. Système de suivi selon l'une quelconque des revendications 1 ou 2, **caractérisé en ce que** les moyens émetteurs sans fil (3) du véhicule (V) consistent en un dispositif assurant une transmission de données en mode paquets.

4. Système de suivi selon l'une quelconque des revendications 1 à 3, **caractérisé en ce que** les moyens de stockage (8) du serveur central de gestion (6) comportent des moyens d'historisation, pour l'édition de journaux de suivi.

5. Système de suivi selon l'une quelconque des revendications 1 à 4, **caractérisé en ce qu'**il comprend encore des moyens pour l'identification unique du conducteur et des moyens pour l'identification unique du véhicule (V), et **en ce que** les données transmises au serveur central de gestion (6) par le module d'interface (5) du véhicule (V) contiennent également lesdits identifiants uniques du conducteur (C) et du véhicule (V).

## Claims

1. A system for the follow-up/tracking of containers (C) incorporating a harmful substance, for example a radioactive substance, by means of a central management server (6), during the transportation thereof between two sites (F, L) in a vehicle (V), in particular from a manufacturing site (F) to a delivery site (L), wherein:
a) said containers (C) are each equipped with wireless transmitting means (1), for at least emitting one unique identification signal, said wireless transmitting means (1) consisting in devices having a maximum range of a few meters to a few tens of meters,
b) the transportation vehicle (V) comprises:
b1) geographical localization means (2),
b2) receiving means (4), for detecting the unique identification signal emitted by each of the containers (C) transported in said vehicle (V), b3) wireless transmitting means (3), and
b4) a module (5) forming the interface between said means (2, 3, 4) equipping the vehicle (V), said module (5) comprising means for transmitting to said central management server (6), via said transmitting means (3), data containing at least: - the unique identifier of each container (C) detected by said receiving means (4) of the vehicle (V), and - the geographical coordinates determined by said geographical localization means (2),
c) said central management server (6) comprises:
c1) receiving means (7), for receiving/acquiring data transmitted by the transmitting means (3) of the vehicle,
c2) data storage means (8),
c3) a module (9) comprising data processing means, for determining the containers (C) transported in said vehicle (V),
wherein said storage means (8) of the central management server (6) comprise a "reference" database, in which is referenced the unique identifier of each container (C) intended to be transported in the vehicle (V), the processing means of the central management server (6) comprising means for comparing the unique identifiers of said "reference" base with the unique identifiers received by the receiving means (7) of said central management server (6), and said central management server (6) comprising alarm means, for informing an operator when a difference is detected between said "reference" base and said unique identifiers received by the receiving means (7) of the central management server (6),
**characterized in that** said transportation vehicle (V) consists of a road vehicle,
**in that** said module (9) forms the interface between the means (7, 8) consisting the server (6),
**in that** said sites (F and L) between which are transported the containers (C) are each equipped with:
- receiving means (15) for detecting the unique identifying signal transmitted by the containers (C),
- communication means (16), and
- a module (17) forming the interface between said receiving means (15) and communication means (16), wherein said module (17) comprises means for transmitting to the central management server (6), via said communication means (16), data containing at least the unique identifier of each container (C) detected by said receiving means (15),
and **in that** said alarm means of the central management server (6) comprise delay means, for delaying for a determined time the activation of said alarm means, in order to allow the passage of the containers (C) between one of said sites (F, L) and the transportation vehicle (V).

2. A follow-up system according to claim 1, **characterized in that** the geographical localization means (2) consist in a Global Positioning System device.

3. A follow-up system according to any one of claims 1 or 2, **characterized in that** the wireless transmitting means (3) of the vehicle (V) consist in a device for packet mode data transmission.

4. A follow-up system according to any one of claims 1 to 3, **characterized in that** the storage means (8) of the central management server (6) comprise historization means, for editing follow-up logs.

5. A follow-up system according to any one of claims 1 to 4, **characterized in that** it further comprises means for uniquely identifying the driver and means for uniquely identifying the vehicle (V), and **in that** the data transmitted to the central management server (6) by the interface module (5) of the vehicle (V) also contain said unique identifiers of the driver and the vehicle (V).

## Patentansprüche

1. System zum Überwachen/Erfassen von Behältern (C), die ein schädliches Produkt, beispielsweise ein radioaktives Produkt, enthalten, mit Hilfe eines zentralen Verwaltungsservers (6) bei ihrem Transport zwischen zwei Standorten (F, L) in einem Fahrzeug (V), insbesondere von einem Herstellungsstandort (F) zu einem Lieferstandort (L), bei dem
a) die Behälter (C) jeweils mit drahtlosen Sendemitteln (1) versehen sind, um mindestens ein einziges Identifikationssignal zu entsenden, wobei die drahtlosen Sendemittel (1) in Vorrichtungen mit einer maximalen Reichweite von einigen Metern bis zu einigen Dutzend Metern bestehen,
b) das Transportfahrzeug (V) umfasst:
b1) geografische Lokalisierungsmittel (2),
b2) Empfangsmittel (4), um das einzige Identifikationssignal, das von jedem der in dem Fahrzeug (V) transportierten Behälter (C) entsandt wird, zu erfassen,
b3) drahtlose Sendemittel (3), und
b4) ein Modul (5), das die Schnittstelle zwischen den Mitteln (2, 3, 4), mit denen das Fahrzeug (V) versehen ist, darstellt, wobei das Modul (5) Mittel umfasst, um an den zentralen Verwaltungsserver (6) über die Sendemittel (3) Daten zu übertragen, die mindestens - den einzigen Identifikator jedes Behälter (C), der von den Empfangsmitteln (4) des Fahrzeugs (V) erfasst wird, und - die geografischen Koordinaten enthält, die von den geografischen Lokalisierungsmitteln (2) bestimmt werden,
c) der zentrale Verwaltungsserver (6) umfasst:
c1) Empfangsmittel (7) für den Empfang/Erwerb der Daten, die von den Sendemitteln des Fahrzeugs (3) entsandt werden,
c2) Mittel zur Datenspeicherung (8),
c3) ein Modul (9), umfassend Mittel zur Datenverarbeitung, um die in dem Fahrzeug (V) transportierten Behälter (C) zu bestimmen,
wobei die Speichermittel (8) des zentralen Verwaltungsservers (6) eine "Referenzdatenbasis" umfassen, in der der einzige Identifikator jedes Behälters (C), der in dem Fahrzeug (V) transportiert werden soll, mit einer Referenz belegt ist, wobei die Verarbeitungsmittel des zentralen Verwaltungsservers (6) Mittel umfassen, um die einzigen Identifikatoren der "Referenzbasis" mit den einzigen Identifikatoren zu vergleichen, die von den Empfangsmitteln (7) des zentralen Verwaltungsservers (6) empfangen werden, und wobei der zentrale Verwaltungsserver (6) Alarmmittel umfasst, um einen Operator zu informieren, wenn ein Unterschied zwischen der "Referenzbasis" und den einzigen Identifikatoren, die von den Empfangsmittein (7) des zentralen Verwaltungsservers (6) empfangen werden, erfasst wird,
**dadurch gekennzeichnet, dass** das Transportfahrzeug (V) in einem Straßenfahrzeug besteht,
dass das Modul (9) die Schnittstelle zwischen den Mitteln (7, 8), aus denen der Server (6) besteht, darstellt,
dass die Standorte (F und L), zwischen denen die Behälter (C) transportiert werden, jeweils ausgestattet sind mit:
- Empfangsmitteln (15), um das einzige Identifikationssignal zu erfassen, das von den Behältern (C) ausgesandt wird,
- Kommunikationsmitteln (16), und
- eine Modul (17), da die Schnittstelle zwischen den Empfangsmitteln (15) und Kommunikationsmitteln (16) herstellt, wobei das Modul (17) Mittel umfasst, um an den zentralen Veraltungsserver (6) über die Kommunikationsmittel (16) Daten zu übertragen, die mindestens den einzigen Identifikator jedes Behälters (C) enthalten, der von den Empfangsmitfeln (15) erfasst wird, und dass die Alarmmittel des zentralen Verwaltungsservers (6) Verzögerungsmittel umfassen, um während einer bestimmten Zeit die Aktivierung der Alarmmittel zu verzögern, um den Übergang der Behälter (C) von eine der Standorte (F, L) und dem Transportfahrzeug (V) zu gestatten.

2. Überwachungssystem nach Anspruch 1, **dadurch gekennzeichnet, dass** die geografischen Lokalisierungsmittel (2) in einem Global Positioning System bestehen.

3. Überwachungssystem nach einem der Ansprüche 1 oder 2, **dadurch gekennzeichnet, dass** die drahtlosen Sendemittel (3) des Fahrzeugs (V) in einer Vorrichtung bestehen, die Datenübertragung im Paketmodus gewährleistet.

4. Überwachungssystem nach einem der Ansprüche 1 bis 3, **dadurch gekennzeichnet, dass** die Speichermittel (8) des zentralen Verwaltungsservers (6) Aufzeichnungsmittel umfassen, um Überwachungsjournale herauszugeben.

5. Überwachungssystem nach einem der Ansprüche 1 bis 4, **dadurch gekennzeichnet, dass** es ferner Mittel für die einzige Identifikation des Fahrers und Mittel für die einzige Identifikation des Fahrzeugs (V) umfasst, und dass die an den zentralen Verwaltungsserver (6) vom Schnittstellenmodul (5) des Fahrzeugs (V) übertragenen Daten auch die einzigen Identifikatoren des Fahrers (C) und des Fahrzeugs (V) enthalten.
